Europäisches Patentamt

European Patent Office

Office européen des brevets

Veröffentlichungsnummer: **0 274 110**
**A1**

## EUROPÄISCHE PATENTANMELDUNG

(21) Anmeldenummer: 87119005.4

(22) Anmeldetag: 22.12.87

(51) Int. Cl.⁴ **C08L 77/00** , C08L 33/02 , C08L 33/08 , C08L 33/10 , C08K 3/22 , C08K 5/05 , C08K 5/09 , C08K 5/57

(30) Priorität: 08.01.87 DE 3700330

(43) Veröffentlichungstag der Anmeldung: 13.07.88 Patentblatt 88/28

(84) Benannte Vertragsstaaten: BE DE ES FR GB NL

(71) Anmelder: **BASF Aktiengesellschaft Carl-Bosch-Strasse 38 D-6700 Ludwigshafen(DE)**

(72) Erfinder: **Zahradnik, Franz, Dr. Schwedlerstrasse 120 D-6700 Ludwigshafen(DE)**
Erfinder: **Ulmerich, Karlheinz Erzbergerstrasse 4a D-6715 Lambsheim(DE)**
Erfinder: **McKee, Graham Edmund, Dr. Kastanienweg 8 D-6940 Weinheim(DE)**
Erfinder: **Reimann, Horst, Dr. Adelheidstrasse 26 D-6520 Worms 1(DE)**
Erfinder: **Pflueger, Richard Am Weidenschlag 20 D-6700 Ludwigshafen(DE)**
Erfinder: **Theysohn, Rainer, Dr. Am Bruch 38 D-6710 Frankenthal(DE)**

(54) **Schlagzähe Polyamid-Formmassen.**

(57) Schlagzähe Polyamidformmassen, enthaltend als wesentliche Komponenten
X) 40-98 Gew.%, bezogen auf X) + Y), eines thermoplastischen Polyamids,
Y) 2-60 Gew.%, bezogen auf X) + Y), eines kautschukartigen Polymerisats, welches Einheiten von Acrylsäure-oder Methacrylsäureestern oder von ungesättigten Carbonsäuren einpolymerisiert enthält,
Z) 0,001-2 Gew.%, bezogen auf X) + Y) einer Metallverbindung ausgewählt aus
Z₁) Salzen von zwei-, drei-oder vierwertigen Metallen mit $C_2$-$C_4$-Carbonsäuren,
Z₂) Oxiden des Germaniums oder Antimons und
Z₃) Alkylorthotitanaten und Dialkylzinndilauraten.

EP 0 274 110 A1

## Schlagzähe Polyamid-Formmassen

Gegenstand der Erfindung sind Polymergemische auf Basis von Polyamiden, die eine hohe Zähigkeit bei hervorragender Homogenität aufweisen.

Die mechanischen Eigenschaften von Polymeren hängen häufig von der Art ihrer Vorbehandlung ab. So ist die Schlagzähigkeit von Formkörpern aus Polyamidkunststoffen erheblich vom Wassergehalt der Formkörper abhängig.

In wasserfreiem Zustand sind besonders die aus leichtfließenden, vorzugsweise hochkristallinen, Polyamiden mit mittlerem Molekulargewicht, hergestellten Formkörper relativ empfindlich gegen Schlagbeanspruchung. Es besteht daher ein Bedarf nach rasch verarbeitbaren, leichtfließenden Polyamidformmassen, aus denen sich Formkörper herstellen lassen, die in trockenem Zustand eine hohe Schlagzähigkeit und Flexibilität aufweisen.

Es sind bereits verschiedene Verfahren zur Erhöhung der Zähigkeit und Flexibilität von Polyamiden bekannt. So wird gemäß der Lehre der Patentschriften US-A 3 742 916 und DE-B 1 669 702 durch die Zugabe von Copolymerisaten aus Ethylen und tertiären (Meth)acrylsäureestern eine gewisse Verbesserung erzielt.

Nach der DE-B 1 241 606 werden Copolymerisate aus Ethylen, (Meth)acrylaten und (Meth)acrylsäure zur Erhöhung der Schlagzähigkeit von Polyamiden verwendet.

In der DE-A 27 13 537 werden hochschlagzähe Produkte beschrieben, bei denen tertiäre Copolymerisate aus Ethylen, 4 Gew.% Acrylsäure und Ethyl-oder tert.-Butylacrylat (12 bzw. 7 Gew.%) eingesetzt werden.

Nach der EP-A 96 264 wird eine weitere Verbesserung durch die Verwendung eines Ethylencopolymeren erreicht, welches 20-40 Gew.% eines primären oder sekundären $C_2$-$C_8$-Alkylesters der (Meth)acrylsäure und 0,5-8 Gew.% eines säurefunktionellen oder latent säurefunktionellen Monomeren einpolymerisiert enthält.

In der DE-A 26 22 973 wird offenbart, daß ein Polyamid in der Zähigkeit verbessert werden kann, wenn man ein Polymeres zugibt, welches Haftstellen zum Polyamid aufweist und einen mindestens um den Faktor 10 niedrigeren Zug-E-Modul als Polyamid hat, also sehr weich ist. Die Polymeren werden in teilneutralisierter Form eingesetzt, bevorzugt sind Copolymere aus Ethylen, (Meth)acrylaten und (Meth)-acrylsäure, wobei letztere als Alkalimetall-, Erdalkalimetall-oder Zinksalze vorliegen.

Bei der Herstellung derartiger schlagzäher Polyamidformmassen durch Vermischen von Polyamid mit der Kautschukkomponente treten häufig Probleme mit der Reproduzierbarkeit der Eigenschaften auf. Auch wenn man sich bemüht, exakt gleichartige Ausgangsmaterialien einzusetzen und identische Einmischbedingungen einzuhalten, erhält man von Charge zu Charge Polyamidformmassen, die in mehr oder weniger starkem Maß unterschiedliche Zähigkeitswerte aufweisen.

Der Erfindung lag daher die Aufgabe zugrunde, Polyamidformmassen bereitzustellen, die eine gleichbleibend hohe Schlagzähigkeit aufweisen.

Diese Aufgabe wird erfindungsgemäß durch Zusatz bestimmter Metallverbindungen gelöst.

Gegenstand der Erfindung sind schlagzähe Polyamidformmassen, enthaltend als wesentliche Komponenten

X) 40-98 Gew.%, bezogen auf X) + Y), eines thermoplastischen Polyamids,

Y) 2-60 Gew.%, bezogen auf X) + Y), eines kautschukartigen Polymerisats, welches Einheiten von Acrylsäure-oder Methacrylsäureestern oder von ungesättigten Carbonsäuren einpolymerisiert enthält,

Z) 0,001-2 Gew.%, bezogen auf X) + Y) einer Metallverbindung ausgewählt aus

Z₁) Salzen von zwei-, drei-oder vierwertigen Metallen mit $C_2$-$C_4$-Carbonsäuren,

Z₂) Oxiden des Germaniums oder Antimons und

Z₃) Alkylorthotitanaten und Dialkylzinndilauraten.

Die Metallverbindungen Z) wirken gewöhnlich als Umesterungskatalysatoren. Es wird angenommen, daß sie im vorliegenden Fall eine Anbindung der Polymerketten des kautschukelastischen Copolymeren an diejenigen des Polyamids bewirken.

Die Polyamide gemäß der Erfindung sind an sich bekannt und umfassen die halbkristallinen und amorphen Harze mit Molekulargewichten von mindestens 5000, die gewöhnlich als Nylon bezeichnet werden. Solche Polyamide können durch Kondensation äquimolekularer Mengen einer gesättigten Dicarbonsäure mit 4 bis 12 Kohlenstoffatomen, mit einem Diamin, welches 4 bis 14 Kohlenstoffatome aufweist, hergestellt werden. Um einen Überschuß an endständigen Amingruppen über die endständigen Carboxylgruppen in dem Polyamid zu erzielen, kann man das Diamin im Überschuß anwenden.

Beispiele für derartige Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612). Eine andere Gruppe von Polyamiden werden durch Ringöffnung von Lactamen erhalten, wie z.B. Poly-ε-caprolactam (Nylon 6), Polylaurinsäurelactam, ferner Poly-11-aminoundecansäure und Bis-(p-aminocyclohexyl)-methandodecandisäureamid. Es ist auch möglich, gemäß der Erfindung Polyamide zu verwenden, die durch Copolymerisation zweier der oben genannten Polymeren oder durch Terpolymerisation der oben genannten Polymeren oder ihrer Komponenten hergestellt worden sind, z.B. Copolymere aus Adipinsäure, Isophthalsäure und Hexamethylendiamin oder Copolymere aus ε-Caprolactam, Terephthalsäure und Hexamethylendiamin. Vorzugsweise sind die Polyamide linear und haben Schmelzpunkte von mehr als 200°C.

Der Anteil der Polyamide beträgt 40-98, vorzugsweise 70-95 und insbesondere 75-92 Gew.%, bezogen auf das Gesamtgewicht von X) + Y).

Bevorzugte Polyamide sind Polyhexamethylenadipinsäureamid und Polycaprolactam. Die Polyamide weisen im allgemeinen eine relative Viskosität von 2,5 bis 5 auf, bestimmt an einer 1 %igen Lösung in $H_2SO_4$ bei 25°C. Polyamide mit einer relativen Viskosität von 2,6 bis 4,0, insbesondere 2,7 bis 3,5, werden bevorzugt verwendet.

Die Schlagzähkomponente Y ist ein kautschukartiges Polymerisat, welches Einheiten von Acrylsäure-oder Methacrylsäureestern oder ungesättigten Carbonsäuren einpolymerisiert enthält.

Als Beispiele für Acrylsäure-bzw. Methacrylsäureester seien Methylacrylat, Ethylacrylat, n-und i-Propylacrylat, n-, i-und t-Butylacrylat, 2-Ethylhexylacrylat sowie die entsprechenden Ester der Methacrylsäure genannt.

Als Beispiele für ungesättigte Carbonsäuren seien Acrylsäure, Methacrylsäure, Maleinsäure und Fumarsäure genannt. Maleinsäureanhydrid verhält sich im Prinzip wie eine ungesättigte Carbonsäure und wird daher ebenfalls in diese Gruppe eingeordnet.

Der Anteil der vorstehend genannten Einheiten an der Schlagzähkomponente kann über weite Bereiche variieren, beträgt jedoch im allgemeinen nicht mehr als 60 Gew.%, vorzugsweise 0,2-50 Gew.%, bezogen auf das Gesamtgewicht der Komponente Y). Diese Obergrenze gilt jedoch nicht für Pfropfkautschuke auf Basis von (Meth)acrylsäureestern; in diesen kann der Anteil an Acrylsäure-bzw. Methacrylsäureestern weit höher als 60 Gew.% sein. Im Extremfall kann die Komponente Y) aus einer Pfropfgrundlage aus elastomeren Polyacrylaten und einer Pfropfhülle aus verschiedenen (Meth)acrylsäureestern oder unges. Carbonsäuren bestehen, d.h. das ganze Polymerisat besteht aus den vorstehend beschriebenen Einheiten.

Nachstehend werden stellvertretend einige bevorzugte Komponenten Y näher beschrieben:

1. Ethylencopolymerisate der Zusammensetzung ABCD, wobei A, B, C und D für Einheiten aus folgenden Monomeren stehen:

A = Ethylen,

B = Ester der Acryl-oder Methacrylsäure, in Mengen von 0-50 Gew.%,

C = Acryl-oder Methacrylsäure, in Mengen von 0,2-10 Gew.%, und

D = Maleinsäureanhydrid, in Mengen von 0-2 Gew.%;

2. In Emulsion hergestellte Pfropfkautschuke der Zusammensetzung E F, wobei die Pfropfgrundlage E ein Polybutadien-oder ein Polyacrylat-Kautschuk ist und in Mengen von 60-90 Gew.% vorliegt, und die Pfropfhülle F (in Mengen von 40-10 Gew.%) aus folgenden Monomeren gebildet wurde:

0-98 Gew.%     Ester der Acryl-oder Methacrylsäure,

0-80 Gew.%     Styrol, Acrylnitril und/oder Vinylmethylether,

2-20 Gew.%     Acryl-oder Methacrylsäure, oder einer längerkettigen Carbonsäure;

3. Pfropfkautschuke der Zusammensetzung G H, wobei die Pfropfgrundlage G ein thermoplastisches Copolymerisat aus Ethylen und Propylen, sowie gegebenenfalls einem Dien ist und in Mengen von 90-99,5 Gew.% vorliegt, und die Pfropfhülle H aus folgenden Monomeren gebildet wurde:

0,5-5 Gew.%     Ester der Acryl-oder Methacrylsäure,

0-5 Gew.%     Acryl-oder Methacrylsäure,

0-2 Gew.%     Maleinsäureanhydrid.

Die vorstehend beschriebenen Olefinpolymerisate ABCD und GH sind im allgemeinen hochmolekular und besitzen einen Schmelzindex MFI 190/2,16 (DIN 53 735) zwischen 4 und 20 g/min. Ihre Herstellung der Copolymerisate kann in üblicher, an sich bekannter Weise durch Polymerisation der Komponenten bei erhöhter Temperatur unter hohem Ethylendruck erfolgen.

Der Anteil der Komponente Y) beträgt 2-60, vorzugsweise 5-30 und insbesondere 8-25 Gew.%, bezogen auf das Gesamtgewicht von X) + Y).

Die erfindungsgemäßen Massen enthalten als Komponente Z) 0,001-2, vorzugsweise 0,01-0,2 und insbesondere 0,05-0,5 Gew.%, bezogen auf X) + Y), einer Metallverbindung, ausgewählt aus

3

Z$_1$) Salzen von zwei-, drei-oder vierwertigen Metallen mit C$_2$-C$_4$-Carbonsäuren,

Z$_2$) Oxiden des Germaniums oder Antimons, und

Z$_3$) Alkylorthotitanaten und Dialkylzinndilauraten.

Als Komponente Z$_1$) werden Acetate des Calciums, Magnesiums, Cadmiums, Bleis oder Kobalts, als Komponente Z$_2$) Antimonpentoxid und als Komponente Z$_3$) C$_1$-C$_8$-Alkylorthotitanate und Di-(C$_1$-C$_8$-Alkyl)-zinndilaurate bevorzugt.

Als Beispiele für C$_1$-C$_8$-Alkylgruppen seien Methyl-, Ethyl-, n-Propyl-, n-Butyl-, n-Hexyl-und Octylgruppen genannt, wovon n-Butylgruppen bevorzugt werden. Dementsprechend werden Tetra(n-butyl)orthotitanat und Di(n-butyl)zinndilaurat als Komponenten Z$_3$) ganz besonders bevorzugt.

Besonders bevorzugt sind Tetrabutylorthotitanat und Dibutylzinndilaurat.

Neben den wesentlichen Komponenten X), Y) und Z) können die Massen gemäß der Erfindung übliche Zusatzstoffe, wie Stabilisatoren und Oxidationsverzögerer, Mittel gegen Wärmezersetzung und Zersetzung durch ultraviolettes Licht, Gleit-und Entformungsmittel, Färbemittel, wie Farbstoffe und Pigmente, faser-und pulverförmige Füll-und Verstärkungsmittel, Keimbildungsmittel, Weichmacher und polymere Zusatzstoffe enthalten.

Die Stabilisatoren, deren Anteil in der Regel nicht mehr als 10 Gew.% der Massen beträgt, können in jedem Stadium der Herstellung zugesetzt werden. Vorzugsweise werden die Stabilisatoren zu einem frühen Zeitpunkt zugesetzt, um zu verhindern, daß die Zersetzung bereits beginnt, bevor die Masse geschützt werden kann. Solche Stabilisatoren sollten vorzugsweise mit der Masse verträglich sein.

Oxidationsverzögerer und Wärmestabilisatoren, die den thermoplastischen Massen im allgemeinen in Mengen bis zu 5 Gew.%, bezogen auf deren Gesamtgewicht zugesetzt werden können, sind z.B. Halogenide von Metallen der Gruppe I des Periodischen Systems, z.B. Natrium, Kalium, Lithium, mit Kupfer-(I)-halogeniden, z.B. Chlorid, Bromid, Jodid, sterisch gehinderte Phenole, Hydrochinone, verschieden substituierte Vertreter dieser Gruppen und Kombinationen derselben.

Als UV-Stabilisatoren kann man ebenfalls diejenigen, die allgemein zu Polymeren zugesetzt werden, in Mengen bis 2,0 Gew.%, bezogen auf das Gemisch X) + Y), verwenden. Beispiele für UV-Stabilisatoren sind verschieden substituierte Resorcine, Salicylate, Benzotriazole, Benzophenone und dergleichen.

Geeignete Gleit-und Entformungsmittel sind Stearinsäure, Stearinalkohol, Stearinsäureamide; ferner können zugesetzt werden: organische Farbstoffe, wie Nigrosin usw., Pigmente, z.B. Titandioxid, Cadmiumsulfid, Cadmiumsulfid-selenid, Phthalocyanine, Ultramarinblau, Ruß usw.; faser-und pulverförmige Füllstoffe und Verstärkungsmittel, wie Kohlenstoffasern, Glasfasern, amorphe Kieselsäure, Asbest, Calciumsilicat, Aluminiumsilicat, Magnesiumcarbonat, Kaolin, Kreide, gepulverter Quarz, Glimmer, Feldspat usw. in Mengen bis 50 Gew.% der Masse; Keimbildungsmittel, wie Talkum, Calciumfluorid, Natriumphenylphosphinat, Aluminiumoxid und feinteiliges Polytetrafluorethylen usw., Weichmacher in Mengen bis etwa 20 Gew.%, bezogen auf das Gemisch X) + Y), z.B. Phthalsäuredioctylester, Phthalsäuredibenzylester, Phthalsäurebutylbenzylester, Kohlenwasserstofföle, N-n-Butylbenzolsulfonamid und o-und p-Toluolethylsulfonamid. Die Färbemittel (Farbstoffe und Pigmente) werden im allgemeinen in Mengen bis etwa 5,0 Gew.%, bezogen auf das Gemisch X) + Y), zugesetzt.

Geeignete polymere Zusatzstoffe sind z.B. Polyphenylenoxid, Polycarbonat, Polyethylen-und Polybutylenterephthalat, sowie ABS-oder ASA-Pfropfcopolymerisate, die dem Gemisch X) + Y) in Mengen von 10-100 Gew.% zugesetzt werden können.

Die Formmassen gemäß der Erfindung werden üblicherweise in einem geschlossenen System durch Schmelzmischen des Polyamids mit den übrigen Komponenten zu einem gleichmäßigen Gemisch in einem Mehrfachschneckenextruder, wie einem Werner 6 Pfleiderer-Zweiwellenextruder oder anderen herkömmlichen Plastifizierungsvorrichtungen, wie einer Brabender-Mühle, einer Banbury-Mühle oder dgl. hergestellt. Die Gemische können aber auch durch gemeinsames Ausfällen aus Lösung oder durch Mischen oder Trockenmischen der Komponenten und anschließendes Schmelzstrangpressen des trockenen Gemisches hergestellt werden.

In einer speziellen Ausführungsform wird die Komponente Z) mit der Komponente Y) oder einem Teil davon vorgemischt und dann als batch der Komponente X), sowie gegebenenfalls der restlichen Komponente Y) zugemischt.

Bedingt durch den intensiven Mischvorgang liegt das Olefinpolymerisat im Polyamid in der Regel in Form von Einzelteilchen verteilt vor, welche eine Größe von unter 3$\mu$m, bevorzugt unter 1$\mu$m, aufweisen.

Die erfindungsgemäßen Formmassen sind für die Spritzgieß-und Extrusionsverarbeitung geeignet, zur Herstellung von hochbeanspruchbaren, thermostabilen, schlagzähen Formteilen für technische Zwecke aller Art.

Die in den Beispielen genannten Teile und Prozente beziehen sich auf das Gewicht.

Beispiel 1

Ein Dispersionscopolymer wurde hergestellt, indem in wäßriger Dispersion 67,2 Teile einer Mischung aus 99 Teilen Butadien und 1 Teil t-Dodecylmerkaptan polymerisiert wurden. Danach erfolgte eine gezielte Agglomeration der Polybutadienteilchen durch Zugabe einer Polymerdispersion aus einem Copolymeren aus Ethylacrylat und Methacrylamid (96:4) in Wasser. Das Verhältnis Ethylacrylatcopolymer zu Polybutadien-t-Dodecylmerkaptanpolymer betrug 4:96. Die agglomerierte Polybutadiendispersion wurde gepfropft (äußere Schale) mit einer Monomermischung aus n-Butylacrylat, t-Butylacrylat und Methacrylsäure (93,4:6:0,6). Das Verhältnis Kern (Polybutadien-t-Dodecylmerkaptan) zu äußerer Schale betrug 7:3.

Die Herstellung der thermoplastischen Formmassen erfolgte in einem Extruder (Type ZSK 53 der Fa. Werner und Pfleiderer). 50 Teile Polyamid 6 (relative Viskosität 3,3, gemessen 1 %ig in konz. Schwefelsäure) wurden am Einzug der Schneckenmaschine zugeführt und in einer ersten Schneckenzone mit tief eingeschnittenen Gewindeprofilen plastifiziert und über eine Knetzone in eine zweite Schneckenzone gefördert, in der die wäßrige Suspension des kautschukelastischen Polymerisats dosiert zugeführt wurde (50 Teile Polymere + 50 Teile Wasser), wobei die Förderung der Dispersion durch den Flüssigkeitsvordruck einer Dosierpumpe bewirkt wurde.

Thermoplast und Kautschuk wurden in den nachfolgenden Abschnitten unterschiedlicher Gangzahl und Gewindesteigung miteinander innig vermischt, wobei im Anschluß an die Knetzone das spontan verdampfte Wasser als Dampf durch Entgasungsstutzen entfernt und anschließend die Formmasse als Strang ausgepreßt, abgekühlt und zerkleinert wurde.

In einem ZSK 30-Extruder der Firma Werner und Pfleiderer wurde dieses Vorprodukt mit Polyamid 6 (relative Viskosität 2,69) auf einen Kautschukgehalt von 24 Gew.% verdünnt. Dieser Ansatz wurde zweimal wiederholt, aber vor der Extrusion wurden jeweils 0,1 Gew.% Tetrabutylorthotitanat (TBOT) und 0,1 Gew.% Dibutylzinndilaurat (DBTDL) auf das Polymergranulat aufgetrommelt.

2 mm Rundscheiben (Massetemperatur 280°C einem Durchstoßversuch nach DIN 53 443 Blatt 2 unterworfen. Die Schädigungsarbeit und Gesamtarbeit wurden ermittelt sowie der Variationskoeffizient. Die Ergebnisse sind folgende:

|  | Schädigungsarbeit bei -40°C [Nm] (Variationskoeffizient %) | Gesamtarbeit -40°C [Nm] (Variationskoeffizient %) |
|---|---|---|
| Ansatz 1 (Vergleich) | 21 (93) | 27 (105) |
| Ansatz 2 (mit TBOT) | 42 (3) | 63 (15) |
| Ansatz 3 (mit DBTDL) | 40 (3) | 75 (7) |

**Ansprüche**

1. Schlagzähe Polyamidformmassen, enthaltend als wesentliche Komponenten

X) 40-98 Gew.%, bezogen auf X) + Y), eines thermoplastischen Polyamids,

Y) 2-60 Gew.%, bezogen auf X) + Y), eines kautschukartigen Polymerisats, welches Einheiten von Acrylsäure-oder Methacrylsäureestern oder von ungesättigten Carbonsäuren einpolymerisiert enthält,

Z) 0,001-2 Gew.%, bezogen auf X) + Y) einer Metallverbindung ausgewählt aus

$Z_1$) Salzen von zwei-, drei-oder vierwertigen Metallen mit $C_2$-$C_4$-Carbonsäuren,

$Z_2$) Oxiden des Germaniums oder Antimons und

Z₃) Alkylorthotitanaten und Dialkylzinndilauraten.

2. Schlagzähe Polyamidformmassen nach Anspruch 1, dadurch gekennzeichnet, daß die Komponente Z₃) ein Alkylorthotitanat mit 1-8 C-Atomen oder ein Di-(C₁-C₈-Alkyl)zinndilaurat ist.

3. Verwendung der schlagzähen Polyamidformmassen gemäß den Ansprüchen 1 und 2 zur Herstellung von Fasern, Folien und Formkörpern.

4. Formkörper, erhältlich aus schlagzähen Polyamidformmassen gemäß den Ansprüchen 1 und 2 als wesentlichen Komponenten.

## EINSCHLÄGIGE DOKUMENTE

EP 87119005.4

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X,Y | <u>EP - A1 - 0 052 796</u> (ALLIED CORPORATION)<br><br> * Ansprüche 1,3,5; Seite 2, Zeilen 34-36 *<br><br>-- | 1,3,4 | C 08 L 77/00<br>C 08 L 33/02<br>C 08 L 33/08<br>C 08 L 33/10 |
| X | <u>US - A - 4 404 325</u> (MASON et al.)<br><br> * Ansprüche 1,3; Spalte 4, Zeilen 38-56; Spalte 5, Zeilen 8-10 *<br><br>-- | 1,3,4 | C 08 K 3/22<br>C 08 K 5/05<br>C 08 K 5/09<br>C 08 K 5/57 |
| X | <u>US - A - 4 310 638</u> (CORAN et al.)<br><br> * Ansprüche; Spalte 3, Zeile 51 - Spalte 4, Zeile 10 *<br><br>-- | 1-4 | |
| Y | DERWENT ABSTRACT, Nr. 76-89 277, (WPI)<br><br>TELESYSTEMS QUESTEL, Paris<br><br> * Zusammenfassung *<br><br>& JP-A-50-83 452 (TOYOBO CO LTD) (05-07-1975)<br><br>---- | 1-4 | **RECHERCHIERTE SACHGEBIETE (Int. Cl. 4)**<br><br>C 08 L 77/00<br>C 08 L 33/00<br>C 08 K |

Der vorliegende Recherchenbericht wurde für alle Patentansprüche erstellt.

| Recherchenort | Abschlußdatum der Recherche | Prüfer |
|---|---|---|
| WIEN | 19-02-1988 | WEIGERSTROFER |